# FASCICULE DE BREVET EUROPEEN

(11) **EP 1 977 600 B1**
(45) Date de publication et mention de la délivrance du brevet: **26.07.2017**
(21) Numéro de dépôt: 07703906.3
(22) Date de dépôt: 16.01.2007
(51) Int. Cl.: H04N 21/643, H04N 21/443, H04N 21/6332

(54) **METHODES DE DIFFUSION OU DE RECEPTION DE SERVICES DE VIDEO NUMERIQUES, APPAREILS CORRESPONDANTS**
VERFAHREN ZUR RUNDSENDUNG ODER ZUM EMPFANG DIGITALER VIDEODIENSTE UND ENTSPRECHENDE VORRICHTUNGEN
METHOD FOR BROADCASTING OR RECEIVING DIGITAL VIDEO SERVICES, CORRESPONDING DEVICES

(30) Priorité: 24.01.2006 FR 0650249
(43) Date de publication de la demande: 08.10.2008
(73) Titulaire: Thomson Licensing, 92130 Issy-les-Moulineaux (FR)
(72) Inventeur: BICHOT, Guillaume, 35630 La Chapelle Chaussee (FR); BURKLIN, Helmut, 35000 Rennes (FR)
(74) Mandataire: Huchet, Anne
(86) Numéro de dépôt international: PCT/EP2007/050391
(87) Numéro de publication internationale: WO 2007/085551

(56) Documents cités:
- EP-A- 0 975 109
- WO-A-02/082834
- WO-A-2004/008688
- WO-A-2005/091635
- GB-A- 2 406 483
- DVB: "DVB-H Implementation Guidelines" DVB DOCUMENT A092, juillet 2005 (2005-07), XP002376159
- EBU ET AL: "Digital Video Broadcasting (DVB)" ETSI DRAFTS, EUROPEAN TELECOMMUNICATIONS STANDARDS INSTITUTE, SOPHIA-ANTIPO, FR, septembre 2004 (2004-09), pages 1-82, XP002388738 ISSN: 0000-0002

## Description

### 1. Domaine de l'invention.

La présente invention se rapporte au domaine de la télévision (ou vidéo) numérique terrestre (ou DVB de l'anglais « Digital Video Broadcast »). Plus précisément, l'invention concerne la diffusion de services vers des terminaux sur un médium radio, les terminaux recevant les services par intermittence.

### 2. Arrière-plan technologique.

La DVB est notamment définie dans les normes ETSI EN 301 192 (ayant pour titre « Digital Video Broadcasting (DVB); DVB specification for data broadcasting » ou spécification DVB de diffusion de données) et TR 101 190 (ayant pour titre «Digital Video Broadcasting (DVB); Implementation guidelines for DVB terrestrial services; Transmission aspects » ou directives de services terrestres DVB - aspects concernant l'émission). La DVB-H est notamment spécifiée dans les normes ETSI EN 302 304 (intitulée « Digital Video Broadcasting (DVB); Transmission System for Handheld Terminals (DVB-H) » ou système de transmission pour les terminaux portables) et TR 102 377 (intitulée « Digital Video Broadcasting (DVB); DVB-H Implementation Guidelines » ou directives de mise en oeuvre).

Selon l'état de la technique, un service de télévision DVB-H (par exemple de type télévision en direct ou de type VOD de l'anglais « Video On Demand » ou vidéo à la demande) peut être diffusé ou téléchargé. Un module DVB-H IPE reçoit les flux diffusés (de l'anglais « multicast ») d'un réseau IP. En fonction de leur configuration, le module les transmet en regroupant les flux appartenant au même service et les encapsule dans une trame avec découpage temporel (ou « time-slice » en anglais ») en y ajoutant des informations de correction d'erreurs (ou FEC de l'anglais « Forward Error Correction ») et des informations de signalisation selon la norme DVB-H. Lorsqu'un terminal reçoit un service, il peut recevoir uniquement ce service en mettant ses moyens de réception en mode sommeil pendant la transmission des autres services. Cette technique présente néanmoins l'inconvénient de ne pas permettre au terminal l'accès immédiat à d'autres services suite à un changement de configuration signalé dans une trame radio ne correspondant pas au service reçu.

### 3. Résumé de l'invention.

L'invention a pour but de pallier ces inconvénients de l'art antérieur.

Plus particulièrement, l'invention a pour objectif de permettre une optimisation de l'accès aux services de diffusion de télévision numérique par un terminal tout en permettant une économie d'énergie du terminal.

A cet effet, l'invention propose une méthode de diffusion de services vidéo numériques comprenant une étape de transmission de services de diffusion de vidéo numérique dans des trames radio à destination d'au moins un terminal possédant un mode veille et un mode sommeil, caractérisée en ce qu'au moins une partie des trames radio comprend une information représentative d'un changement dans le contenu des trames radio, de sorte que le terminal puisse rester en mode veille pour recevoir des données relatives au contenu des trames radio ayant changé.

Ainsi, lorsque le terminal est en écoute (mode veille) de trames radio associées à un canal (dit, par exemple, canal courant), et est en sommeil lorsque des trames radio non associées au canal courant sont émises, le terminal peut être en mode veille durant l'émission des données relatives au contenu d'au moins une trame radio non associées au canal courant pour recevoir ces données.

Avantageusement, la méthode comprend une étape d'insertion de trames d'encapsulation multiprotocole dite trames MPE dans les trames radio, au moins une partie des trames MPE comprenant l'information représentative d'un changement dans le contenu des trames radio.

Selon une caractéristique préférée, chacune des trames MPE comprend l'information représentative d'un changement dans le contenu des trames radio.

Préférentiellement, la méthode comprend une étape d'insertion de l'information dans au moins une partie des trames MPE par un module générant les trames MPE.

Selon des caractéristiques particulières, l'information est représentative d'un changement de table système et/ou d'un changement d'un canal d'annonces.

Avantageusement, la méthode comprend une étape de changement d'état de l'information lors d'un changement dans le contenu des trames radio.

Selon une autre caractéristique, la méthode comprend une étape de mise à un état prédéfini de l'information, l'état prédéfini étant représentatif d'un changement dans le contenu des trames radio.

L'invention concerne également une méthode de réception de trames radio, chacune des trames radio comprenant au moins un service de diffusion de vidéo numérique, la méthode étant remarquable en ce qu'elle comprend les étapes de :
- de réception d'au moins une trame radio par un terminal en mode veille ;
- de détection dans une trame radio reçue, d'une information représentative d'un changement dans le contenu de trames radio diffusées.

Préférentiellement, la méthode de réception comprend une étape de maintien en mode veille lorsque le terminal a détecté l'information représentative d'un changement tant que le terminal n'a pas reçu les données correspondant au contenu des trames radio diffusées, ayant changé.

Avantageusement, l'information est représentative d'un changement de table système et/ou d'un changement d'un canal d'annonces.

Avantageusement, la méthode de réception comprend une étape de détection de changement d'état de l'information, un changement d'état étant représentatif d'un changement dans le contenu des trames radio.

Selon une autre caractéristique, la méthode de réception comprend une étape de détection d'un état prédéfini de l'information, l'état prédéfini étant représentatif d'un changement dans le contenu des trames radio.

Par ailleurs, l'invention concerne un appareil de diffusion de services vidéo numériques comprenant des moyens de transmission de services de diffusion de vidéo numérique dans des trames radio à destination d'au moins un terminal possédant un mode veille et un mode sommeil, au moins une partie des trames radio comprend une information représentative d'un changement dans le contenu des trames radio, de sorte que le terminal puisse rester en mode veille pour recevoir des données relatives au contenu des trames radio ayant changé.

En outre, l'invention concerne un appareil de réception de trames radio, chacune des trames radio comprenant au moins un service de diffusion de vidéo numérique, l'appareil comprenant :
- des moyens de réception d'au moins une trame radio par un terminal en mode veille ;
- des moyens de détection dans une trame radio reçue, d'une information représentative d'un changement dans le contenu de trames radio diffusées.

### 4. Liste des figures.

L'invention sera mieux comprise, et d'autres particularités et avantages apparaîtront à la lecture de la description qui va suivre, la description faisant référence aux dessins annexés parmi lesquels :
- la figure 1 illustre schématiquement une infrastructure de réseau permettant la diffusion d'un service vidéo DVB-H vers un terminal, selon un mode particulier de réalisation de l'invention ;
- la figure 2 présente une structure d'une trame de données transmise vers le terminal de l'infrastructure de la figure 1 ;
- la figure 3 illustre le découpage temporel des services transmis vers le terminal de l'infrastructure de la figure 1 ;
- la figure 4 décrit une trame radio transmise vers le terminal de l'infrastructure de la figure 1 ;
- les figures 5 et 6 illustrent la structure respectivement d'un terminal et d'un point d'accès du réseau de la figure 1 ;
- la figure 7 présente un algorithme mis en oeuvre dans le terminal de la figure 5 ; et
- la figure 8 décrit un algorithme mis en oeuvre dans le point d'accès de la figure 6.

### 5. Description détaillée de l'invention.

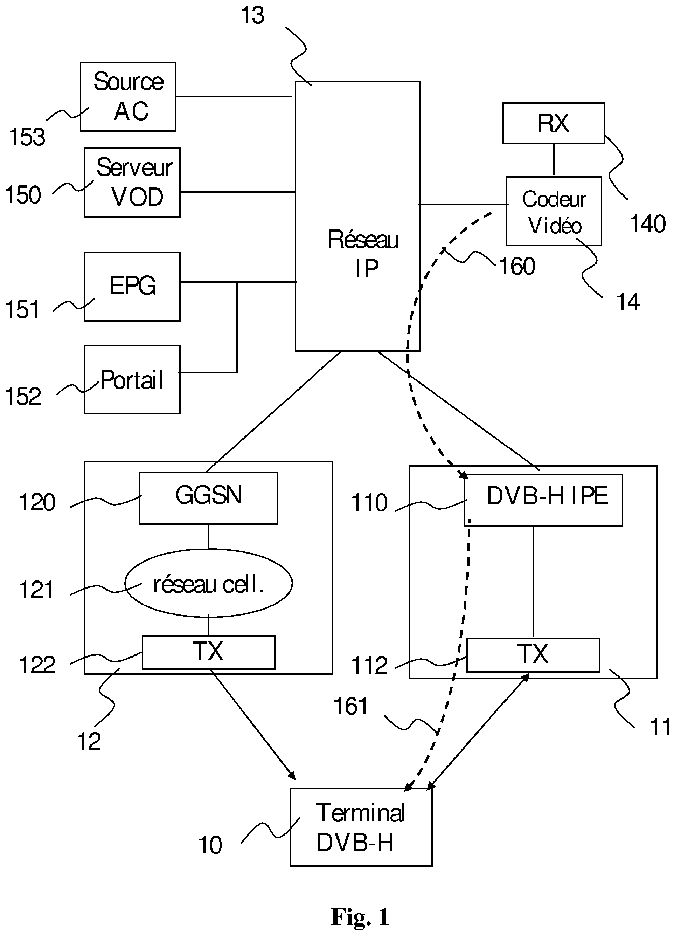

La figure 1 illustre schématiquement une infrastructure de réseau DVB-H permettant la transmission d'un service vidéo DVB-H vers un terminal 10 selon la norme H264 en QCIF (Quart de « Common Intermediate Format » ou format intermédiaire commun correspondant à une résolution 176x144). L'infrastructure comprend notamment :
- une épine dorsale de réseau IP 13 ;
- un codeur vidéo 14 recevant des données d'un récepteur 140 et code (ou transcode) des flux vidéo en cours de transmission (en anglais « life channels ») ;
- des serveurs respectivement de VOD 150, EPG 151, un portail 152 et une source d'annonces 153 ;
- un réseau cellulaire 12 ;
- un réseau DVB-H 11 ; et
- le terminal 10.

Les serveurs 14 et 150 à 153 transmettent des services DVB-H au terminal 10 via le réseau IP 13 et le réseau DVB-H 11. Le débit moyen du service entier est égal à environ 250kbits/s. Le service rassemble plusieurs flux (ou « stream » en anglais) IP (de l'anglais « Internet Protocol » ou protocole internet) : un pour la vidéo, un pour l'audio et, éventuellement, d'autres services (par exemple description de session (selon un protocole SDP)).

Le réseau DVB-H 11 comprend notamment :
- un module 110 d'encapsulation IP (ou IPE de l'anglais « IP Encapsulation ») de type DVB-H ; et
- un émetteur 112.
   Le module 110 et l'émetteur 112 sont préférentiellement dans deux appareils séparés. Selon une variante, ils sont regroupés dans un même appareil.

Le module 110 DVB-H IPE reçoit les flux 160 diffusés (de l'anglais « multicast ») du réseau IP 13 suivant un protocole du type RTP (de l'anglais « Real Time Protocol » ou protocole temps réel) sur UDP/IP (de l'anglais « User Datagramm Protocol sur IP »). En fonction de leur configuration, le module 110 les transmet vers notamment l'émetteur 112 en regroupant les flux appartenant au même service et en les encapsulant dans une trame 161 avec découpage temporel (ou « time-slice » en anglais ») en y ajoutant des informations de correction d'erreurs (ou FEC de l'anglais « Forward Error Correction ») et des informations de signalisation selon la norme DVB-H, ainsi qu'un drapeau (ou « flag » en anglais) signalant des changements dans les services diffusés selon l'invention. Le débit de transmission est généralement élevé et peut atteindre, par exemple, 15Mbits/s. Le flux MPEG-TS 161 (de l'anglais « Motion Picture Expert Group- Transport Stream ») est transmis vers l'émetteur 112 via le coeur de réseau 11. L'émetteur 112 le transmet alors suivant un canal DVB-H hertzien le flux MPEG-TS vers le terminal 10 (et éventuellement d'autres terminaux mettant en oeuvre ou non l'invention). Le terminal 10 analyse alors les informations de signalisation DVB-H présentes dans le flux 16, associe une adresse IP avec une adresse MPREG-TS et peut alors lire tous les paquets IP associés à cette adresse et reconstruit les différents flux 160 émis à l'origine. Comme détaillé plus loin, le terminal 10 détecte des éventuels changements dans les services diffusés en analysant les drapeaux insérés dans la trame 161 reçue.

Le réseau cellulaire 12 est du type 3G (c'est-à-dire de troisième génération) et comprend notamment :
- une passerelle 120 de réseau cellulaire GGSN ;
- un coeur de réseau 121 ; et
- un émetteur 122 (par exemple une station de base).

Le terminal 10 est apte à échanger des données de contrôle avec l'émetteur 122 permettant une interactivité avec le fournisseur de services, les données de type vidéo transitant par l'émetteur DVB-H 112.

Selon une variante de réalisation non illustrée, le module 110 est relié à plusieurs émetteurs similaires à l'émetteur 112 et leur transmet le même flux MPEG-TS 161.

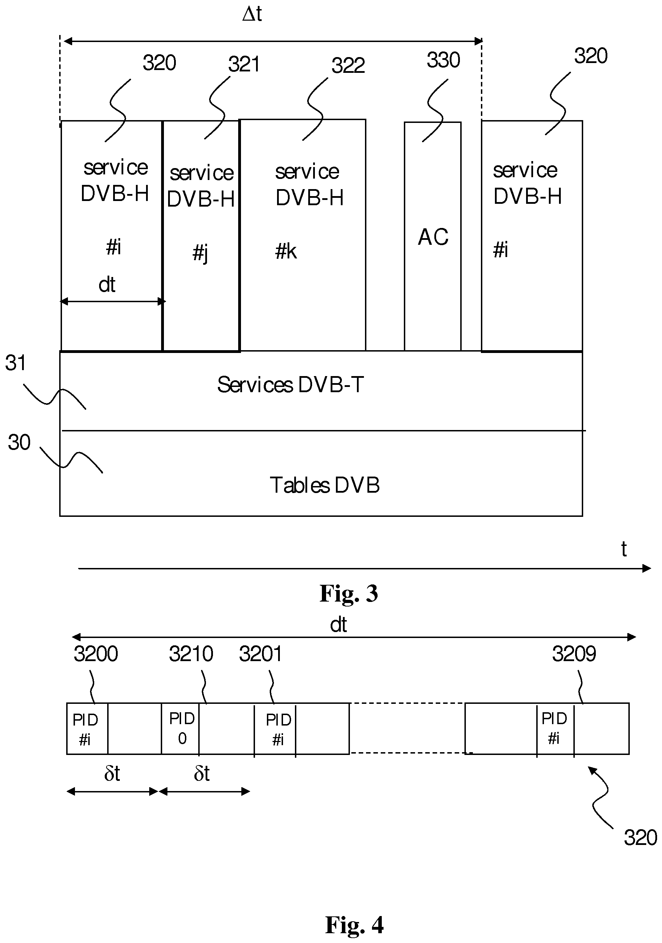

La figure 3 présente le découpage temporel (selon une vue macroscopique) des services transmis vers le terminal 10 par l'émetteur 112.

Certaines informations sont diffusées de manière quasi-continue par l'émetteur 112 sur un canal radio, notamment :
- des services DVB-T (ou DVB terrestre) 31 ; et
- des informations de signalisation incluant des tables de services DVB 30.

Les tables de services DVB 30 (ou tables système) sont décrites dans les normes DVB et comprennent notamment :
- une table PAT (ou « table d'accès au programme » de l'anglais « Programm Access Table ») qui permet d'accéder aux autres tables utilisées ;
- une table INT qui donne la correspondance entre une adresse internet et un flux de transport (ou « transport stream » en anglais).

D'autres informations sont diffusées de manière discontinue sous forme de trame radio (ou « burst » en anglais) par l'émetteur 112, notamment :
- des trames 320, 321 et 322 correspondant à des services DVB-H distincts i, j et k ; et, éventuellement,
- des trames de signalisation 330 correspondant, par exemple, à des canaux d'annonces (ou « announcement channels » en anglais).

Les trames 330 permettent de transmettre au terminal 10, lorsqu'il est en écoute de ces trames, des informations spécifiques à un ou plusieurs services ou des informations d'ordre général (par exemple, des services de secours, des nouveaux services,...).

En mode établi, le terminal 10 se contente d'écouter le ou les services choisis par l'utilisateur et ses moyens de réception de trames radio (notamment un module de réception 54 qui comprend le module radio fréquence, le démodulateur, et des décodeurs associés au FEC) restent en mode sommeil en dehors de l'écoute des trames radio correspondantes lorsque aucun changement dans les tables et/ou dans le canal d'annonce n'est signalé.

Ainsi, si le terminal 10 est en écoute du service i correspondant à la trame 320, le temps Δt séparant le début de la trame courante 320 de la trame suivante est signalé dans la trame 320. Ainsi, dès que le terminal détecte la fin de la trame, il se met en mode veille jusqu'au début de la trame 320 suivante. Ainsi, le terminal 10 économise de l'énergie, ce qui est particulièrement avantageux si le terminal 10 n'est pas continûment branché à un réseau d'alimentation électrique (par exemple, terminal à batterie).

La figure 4 illustre, plus en détails, la trame 320. La trame 320 comprend des paquets de flux de transport (ou « transport stream » en anglais) 3200 à 3209 de 188 octets correspondant au service i et, éventuellement, un ou plusieurs paquets de flux de transport 3210 correspondant à une table système émises de manière quasi-continue (par exemple tables PAT (qui correspond, à titre illustratif au paquet de flux de transport 3210 dont le l'identifiant PID est 0) et INT). Chaque paquet de flux de transport a une durée δt petite devant la durée dt de la trame 320 qui est, par exemple, égale à 150 ms (cas d'une trame correspondant au remplissage d'une mémoire tampon MPE-FEC de 256 octets (192 octets de données et 64 octets de FEC (de l'anglais « Forward Error Correction » ou correction d'erreurs a posteriori) multiplié par le nombre de lignes égal à 1024 soit environ 2,1 Mbits, pour un débit de transmission de 15 Mpbs (qui utilise par exemple une modulation QAM à 64 états)). Dans DVB-H, on transporte la vidéo sous IP en utilisant des trames MPE (de l'anglais « Multi Protocol Encapsulation » ou encapsulation multi-protocole) qui permet de transporter des paquets IP dans des données privées.

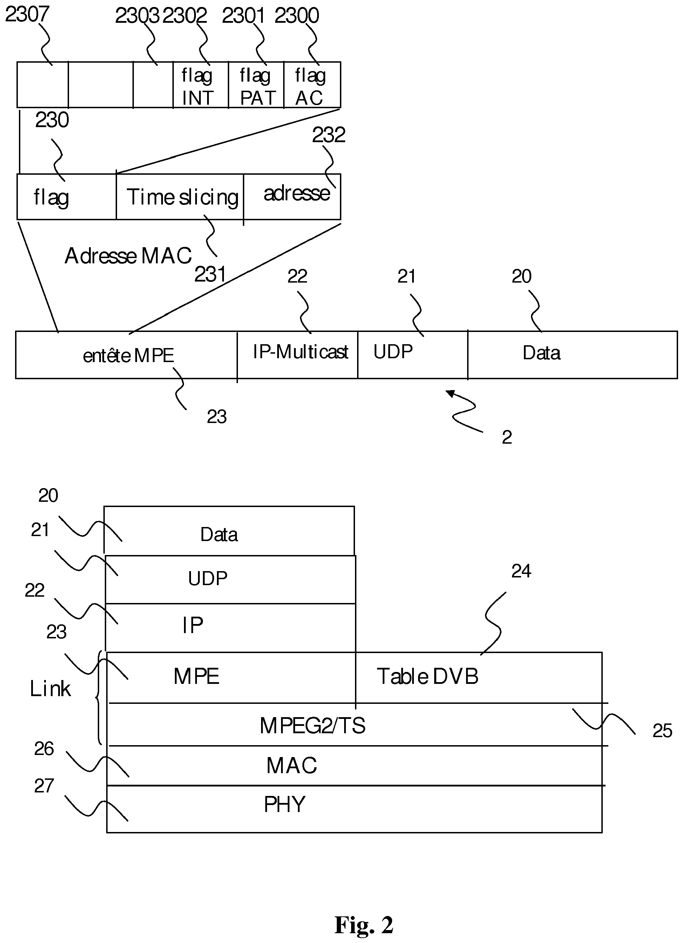

Chaque trame 320 comprend au moins une trame MPE-FEC 2 telle qu'illustrée en regard de la figure 2. La trame 2 comprend :
- une partie 27 correspondant à la couche physique ;
- des données 26 associées à la couche d'accès au canal (MAC) ;
- une partie correspondant à la couche liaison qui se divise en une partie 25 correspondant à une sous-couche de niveau inférieur MPEG2/TS et à une sous-couche 23 MPE ;
- la sous-couche 23 MPE comprend une couche IP 22 ;
- la couche IP 22 comprend une couche UDP(ou « User Datagramm Protocol ») 21 (par exemple du type RTP (ou « Protocole Temps Réel » de l'anglais « Real Time Protocol ») ou FLUTE (ou « livraison de fichier sur transport unidirectionnel » ou « File Delivery over unidirectionnal Transport » en anglais) défini par la norme RFC3926) ; et
- des données 20.

L'entête MPE 23 comprend un champ qui était réservé pour une adresse MAC dans les premières versions des normes DVB. Les trames MPE étant diffusées, l'adresse MAC est inutile et, selon l'invention, ce champ comprend :
- un champ drapeau 230 sur un octet ;
- un champ découpage temporel 231 sur quatre octets ; et
- un champ 232 pour une adresse de multidiffusion (« multicast « en anglais).

Le champ drapeau 230 comprend lui même :
- un champ 2302 sur un bit indiquant un changement ou non dans une table INT ;
- un champ 2301 sur un bit indiquant un changement ou non dans une table PAT ;
- un champ 2300 sur un bit indiquant un changement ou non dans un canal d'annonce ; et
- des champs 2303 à 2307 non utilisés et valant, par exemple, 0 par défaut.

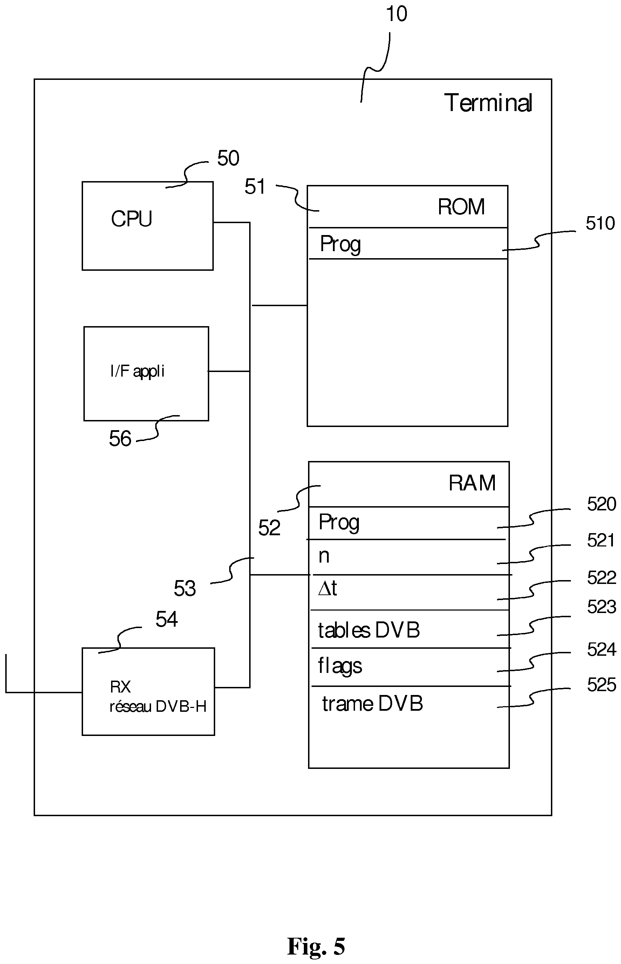

La figure 5 illustre schématiquement le terminal 10. Le terminal 10 comprend, reliés entre eux par un bus d'adresses et de données 53 :
- un microprocesseur 50 (ou CPU) ;
- une mémoire non volatile de type ROM (de l'anglais « Read Only Memory ») 51 ;
- une mémoire vive ou RAM (de l'anglais « Random Access Memory ») 52 ;
- un module 54 de réception du signal reçu sur le réseau DVB-H (ou 3G) ; et
- une interface 56 transmettant les images reçues vers l'application audio/vidéo (par exemple pour affichage ou enregistrement).

Par ailleurs, chacun des éléments illustrés en figure 5 est bien connu de l'homme du métier. Ces éléments communs ne sont pas décrits ici.

On observe que le mot « registre » utilisé dans la description désigne dans chacune des mémoires mentionnées, aussi bien une zone de mémoire de faible capacité (quelques données binaires) qu'une zone mémoire de grande capacité (permettant de stocker un programme entier ou tout ou partie des données représentatives d'un service audio/vidéo reçu).

La mémoire ROM 51 comprend notamment un programme « prog » 510.

Les algorithmes mettant en oeuvre les étapes du procédé décrit ci-après sont stockés dans la mémoire ROM 51 associée au terminal 10 mettant en oeuvre ces étapes. A la mise sous tension, le microprocesseur 50 charge et exécute les instructions de ces algorithmes.

La mémoire vive 52 comprend notamment :
- dans une registre 520, le programme de fonctionnement du microprocesseur 50 chargé à la mise sous tension du terminal 10;
- une référence service requis n dans un registre 521 ;
- une valeur d'intervalle d'écoute Δt dans un registre 522 ;
- des tables DVB courantes 523 (notamment des tables INT et PAT, et éventuellement des données relatives au canal d'annonces) ;
- des drapeaux 524 correspondant aux drapeaux 2300 à 2302 reçus ; et
- une ou plusieurs trames audio/vidéo reçues dans un registre 525.

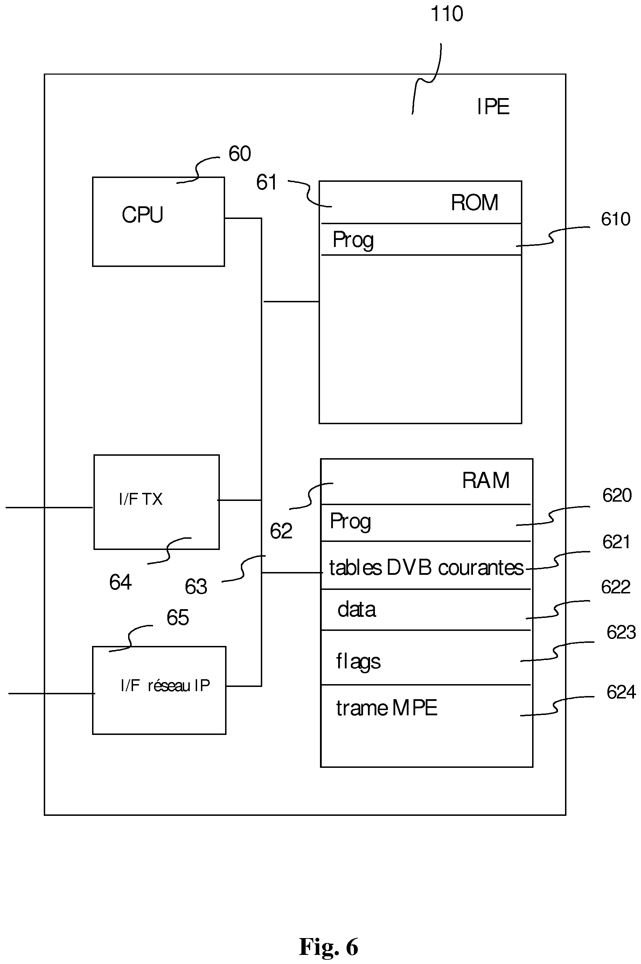

La figure 6 illustre schématiquement le module IPE 110. Le module 110 comprend, reliés entre eux par un bus d'adresses et de données 63 :
- un microprocesseur 60 (ou CPU) ;
- une mémoire non volatile de type ROM (de l'anglais « Read Only Memory ») 61 ;
- une mémoire vive ou RAM (de l'anglais « Random Access Memory ») 62 ;
- une interface 64 vers le ou les émetteurs 64 ; et
- une interface 65 recevant les données de service et/ou de signalisation à transmettre du réseau 13.

Par ailleurs, chacun des éléments illustrés en figure 6 est bien connu de l'homme du métier. Ces éléments communs ne sont pas décrits ici.

La mémoire ROM 61 comprend notamment un programme « prog » 610.

Les algorithmes mettant en oeuvre les étapes du procédé décrit ci-après sont stockés dans la mémoire ROM 61 associée au module 110 mettant en oeuvre ces étapes. A la mise sous tension, le microprocesseur 60 charge et exécute les instructions de ces algorithmes.

La mémoire vive 62 comprend notamment :
- dans une registre 620, le programme de fonctionnement du microprocesseur 60 chargé à la mise sous tension du module 110 ;
- des données reçues ou entrées localement dans un registre 622 ;
- les tables systèmes DVB (par exemple PAT, INT et, selon une variante, les données relatives au canal d'annonces) dans un registre 621 ;
- des drapeaux 623 correspondant aux drapeaux 2300 à 2302 reçus ; et
- une ou plusieurs trames MPE/FEC dans un registre 624.

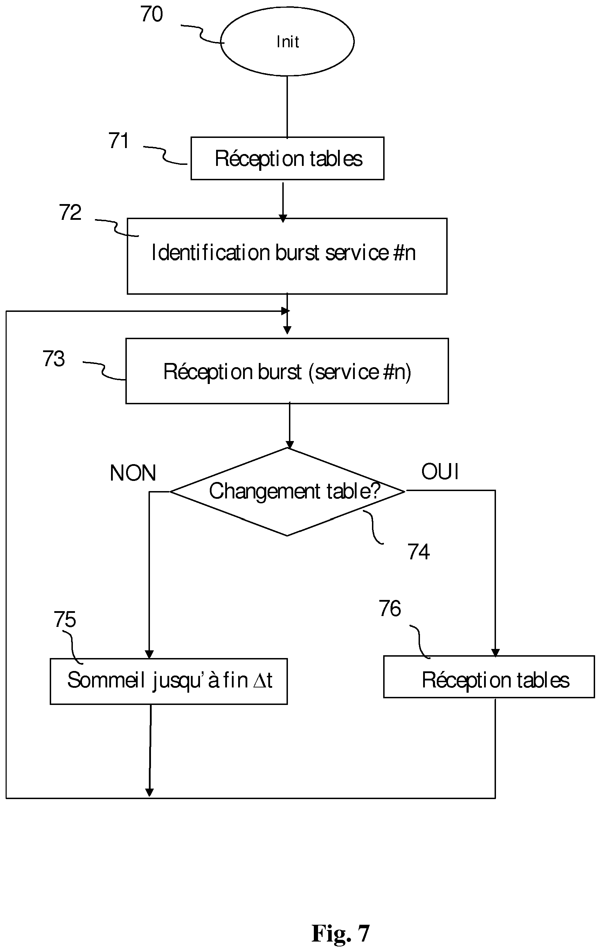

La figure 7 illustre un algorithme de réception mis en oeuvre dans le terminal 10.

Au cours d'une première étape 70, le terminal 10 initialise les différents paramètres de réception.

Puis, au cours d'une étape 71, le terminal 10 reçoit de l'émetteur 112 les tables DVB, et notamment les tables PAT, INT qu'il mémorise dans le registre 523.

Ensuite, au cours d'une étape 72, le terminal 10 présente à l'utilisateur les services disponibles en fonction des tables PAT et INT et identifie la trame radio (ou burst) associée au service n (les trames radio associées aux services n) correspondant au(x) service(s) souhaité(s) par l'utilisateur, en fonction du contenu des tables PAT et INT. L'identifiant n du service souhaité est stocké dans le registre 521. Au cours de l'une des étapes 71 ou 72, le registre flags 524 est initialisé à 0.

Puis, au cours d'une étape 73, le terminal 10 se met à l'écoute de la trame radio correspondant au service n. En début de trame radio, le terminal extrait la durée Δt séparant le début de la trame courante du début de la trame radio suivante associée au même service n, lance une temporisation correspondant à la durée Δt et mémorise cette durée dans le registre 522. La réception de trame radio se poursuit jusqu'à la détection d'un indicateur de fin de trame présent dans la trame radio. La trame radio et/ou le ou les trames MPE comprises dans la trame radio sont stockées dans un registre 525.

Suite à l'étape 73 ou pendant l'étape 73, au cours d'une étape 74, le terminal 10 lit le champ drapeau 230 contenu dans chaque trame MPE présent dans la trame radio reçue et vérifie si au moins un des drapeaux 2300 à 2302 comprend une valeur égale à 1 correspondant à un changement dans la table correspondante.

Dans la négative (et après la fin de l'étape 73), au cours d'une étape 75, le terminal 10 met en mode sommeil ses moyens de réception de trames radio jusqu'à l'expiration de la temporisation de durée Δt. A l'expiration de cette durée (ou un peu avant pour prendre en compte les temps de réaction des différents éléments du terminal 10), l'étape 73 est réitérée.

Dans l'affirmative, au cours d'une étape 76, le terminal 10 reste à l'écoute du canal radio pour recevoir les tables et/ou les données transmises sur le canal d'annonces, un changement ayant été signalé par l'un des drapeaux 2300 à 2302. Ainsi, si le drapeau 2302 signale un changement dans le canal d'annonce, le terminal 10 reste à l'écoute du canal radio jusqu'à réception d'une trame radio susceptible de contenir le canal d'annonce et mémorise le contenu du canal d'annonce correspondant pour qu'il puisse être exploité par une application quelconque (par exemple pour présentation à l'utilisateur du terminal 10 ou annonce d'un nouveau service). Si plusieurs trames radio contiennent des informations correspondant au canal d'annonces, à la réception de la première trame radio, le terminal détermine la trame radio suivante contenant le canal d'annonce grâce au pointeur dédié présent dans la première trame radio et traite les trames correspondantes comme s'il s'agissait d'une trame de service (il n'est plus nécessaire de rester en mode veille après la réception de la trame radio correspondant au service n). Le terminal reste à l'écoute des trames radio contenant le canal d'annonce, tant que l'information sur le canal est renouvelée. Si l'information sur le canal n'est pas renouvelée (par exemple après expiration d'une temporisation) ou si un signal de fin de transmission sur le canal d'annonces est détecté, le terminal 10 cesse préférentiellement d'écouter les trames radio correspondantes.

De même, si le drapeau 2300 (respectivement 2301) signale un changement dans la table PAT (respectivement INT), le terminal 10 reste à l'écoute du canal radio tant que la table PAT (respectivement INT) n'est pas reçue (cette table peut être dans la trame radio 320 ou non : si elle n'est pas dans la trame radio 320, le terminal 10 écoute la trame suivante 321 (ou les trames suivantes 322 si nécessaire)). A la réception de la table PAT (respectivement INT), le terminal mémorise la table pour qu'elle puisse être exploitée (par exemple, présentation à l'utilisateur si un nouveau service apparaît ou basculement sur un service si un appareil est en attente dans le cas d'une nouvelle table PAT) (par exemple, présentation et/ou stockage d'une nouvelle adresse IP si une nouvelle table INT est reçue). Ainsi, le terminal 10 réagit très vite dès qu'une nouvelle table système et/ou des informations sur le canal d'annonces est ou sont transmises tout en optimisant la consommation d'énergie de ses moyens de réception radio.

Lorsque les informations du canal d'annonce et/ou des tables PAT et INT ont été reçues, le terminal réitère l'étape de réception de trame radio 73. Préférentiellement, les moyens de réception de trames radio du terminal 10 se mettent en sommeil jusqu'à l'expiration de la temporisation Δt avant de réitérer l'étape 73.

Préférentiellement, les drapeaux 2300 à 2302 sont activés dans plusieurs trames MPE consécutives correspondant à un même service n pour permettre au terminal 10 de détecter un changement si une trame radio correspondante n'est pas reçue correctement. Dans ce cas, plusieurs modes de réalisation sont possibles, et notamment :
- selon un premier mode relativement simple à mettre en oeuvre et tel que décrit précédemment, le terminal 10 réagit de manière systématique à la détection d'un changement en faisant les traitements correspondant lors de l'étape 76 ;
- selon un second mode permettant d'optimiser la consommation d'énergie (en réception et en traitement), le terminal 10 effectue une seule fois l'étape 76 (par exemple, en n'effectuant pas l'étape 76 tant que le(s) drapeau(x) associés ne sont pas repassés à l'état 0 indiquant une absence de changement, ou tant qu'une temporisation de quelques secondes lancée lors d'un passage à un d'un drapeau 2300 à 2302 n'a pas expiré).

Selon une variante de réalisation, ce sont les changements de valeur des drapeaux 2300 à 2302 qui indiquent un changement d'état respectivement d'une table PAT, d'une table INT ou dans le canal d'annonce. Selon ce mode de réalisation, le terminal 10 mémorise les drapeaux courants et les compare aux drapeaux reçus lors de l'étape 74. Cette variante présente l'avantage de permettre au terminal 10 de déterminer précisément s'il a pris en compte un changement.

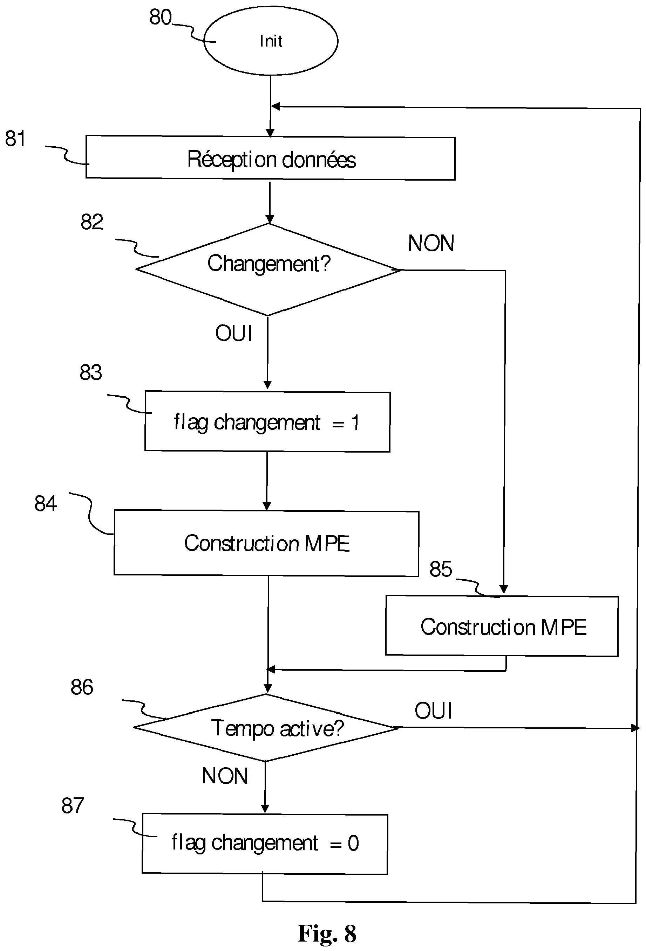

La figure 8 illustre un algorithme de réception mis en oeuvre dans le module 110 générant et/ou détectant un changement dans des tables systèmes (par exemple INT et PAT) et/ou le canal d'annonce et mettant à jour le ou les drapeaux correspondant.

Au cours d'une première étape 80, le module IPE 110 initialise les différents paramètres de réception de trames du réseau IP 13 et de transmission de trames MPE vers l'émetteur 112. Le registre 622 est initialisé à une valeur indiquant qu'aucune table système n'a été générée. Les drapeaux correspondant à des changements sont initialisés à une valeur nulle, indiquant, par défaut, une absence de changement.

Ensuite, au cours d'une étape 81, le module IPE 110 reçoit des données correspondant à des flux de services et/ou à une configuration du module et les mémorise dans un registre 622. Les données de configuration sont, par exemple, entrées par l'opérateur directement dans le module ou reçues via le réseau IP ou tout autre lien.

Puis, au cours d'un test 82, le module IPE 110 vérifie si un changement intervient dans les tables système (PAT et/ou INT) ou dans le canal d'annonce. Un changement dans une table système peut se produire notamment lorsqu'une donnée de configuration est modifiée par un opérateur et/ou à la réception d'un nouveau flux (autorisé par configuration préalable). Plus généralement, le module IPE 110 détecte des changements dans les services (changement dans un service en cours de transmission ou nouveau service par exemple) transmis à l'émetteur 112. Un changement peut également se produire lorsque l'IPE 110 est configuré pour réagir sur un paramètre propre à un flux, par exemple, en fonction d'un débit dont la valeur inférieure ou supérieure à un seuil prédéfini entraîne un changement dans la transmission radio vers le terminal.

Si une information devant être émise sur le canal d'annonce (par exemple méta données (ou meta data) relatives à un nouveau service) est reçue de la source 153, le module 110 considère qu'il y a un changement dans le canal d'annonce : selon un mode de réalisation particulier, toutes les informations concernant le canal d'annonce doivent être transmises une fois ou un faible nombre de fois, par défaut, le canal d'annonce n'étant pas utilisé ; selon une variante, la même information de canal d'annonce est répétée de nombreuses fois : dans ce cas, le module IPE 110 mémorise dans la mémoire 62, la dernière information associée au canal d'annonce transmise et la compare à une information courante également mémorisée dans la mémoire 62.

Dans la négative, au cours d'une étape 85, le module 110 construit une trame MPE avec notamment une entête comprenant les drapeaux 2300 à 2302 mis à jour et des données 622 correspondant à un service, à des tables systèmes et/ou à un canal d'annonce.

Dans l'affirmative, un changement à lieu et, au cours d'une étape 83, les drapeaux 2300 à 2302 correspondant au changement sont mis à jour avec une valeur égale à 1. Le module 110 lance également une temporisation d'une durée T qui correspond à la durée pendant laquelle les drapeaux indiquant un changement sont activés. La durée T est supérieure ou égale à la durée ΔT pour permettre à chaque terminal recevant un service n de recevoir le drapeau indiquant un changement. Préférentiellement, la durée T est supérieure ou égale à plusieurs fois la durée ΔT pour permettre à chaque terminal recevant un service n de recevoir le drapeau indiquant un changement même si des trames radio sont perdues. Ainsi, T est avantageusement supérieure ou égal à 2 fois la durée ΔT et inférieur ou égal à 10 fois la durée ΔT (2 ΔT<= T <= 10ΔT) (ΔT étant de l'ordre de 1 à 3 secondes).

Suite à l'étape 83, au cours d'une étape 84, le module 110 construit une trame MPE avec notamment une entête comprenant les drapeaux 2300 à 2302 mis à jour et des données 622 correspondant à un service, à des tables systèmes et/ou à un canal d'annonce.

Suite à l'une des étapes 84 ou 85, au cours d'un test 86, le module 110 vérifie si la temporisation associée au drapeau mis à jour lors de l'étape 83 est active.

Dans la négative, la dernière temporisation lancée au cours de l'étape 83 ayant expiré, au cours d'une étape 87, les drapeaux 2300 à 2302 sont réinitialisés à une valeur nulle.

Suite à l'étape 87, ou si la dernière temporisation lancée au cours de l'étape 83 n'a pas expiré, l'étape 81 est réitérée.

Selon le mode de réalisation décrit, une seule temporisation est utilisée lorsque l'un des drapeaux 2300 à 2302 est activé. Selon une variante de réalisation, chaque drapeau 2300 à 2302 est associé à une temporisation. Ainsi, la valeur de la temporisation peut être définie en fonction du drapeau associé et seule la valeur du drapeau associée est reinitialisée après expiration de la temporisation associée au cours de l'étape 87, le test 86 testant indépendamment chacune des temporisations.

Comme indiqué en regard de la figure 7, selon une variante de réalisation, ce sont les changements de valeur des drapeaux 2300 à 2302 qui indiquent un changement d'état respectivement d'une table PAT, d'une table INT ou dans le canal d'annonce. Ce mode de réalisation est mis en oeuvre de manière duale coté terminal 10 et coté module 110 qui change l'état du ou des drapeaux concernés lors des étapes 83 et 87.

Selon une variante, l'émetteur 112 est relié au module IPE et à un autre système émettant des tables DVB-T via un multiplexeur. Dans ce cas, avantageusement, une information de changement de configuration est transmise au module IPE par l'autre système, afin de permettre au module IPE de mettre à jour un ou plusieurs drapeaux dédiés aux tables DVB-T, ce ou ces drapeaux étant par ailleurs gérés comme les drapeaux 2300 à 2302.

Bien entendu, l'invention ne se limite pas aux modes de réalisation décrits précédemment.

En particulier, l'insertion des drapeaux indiquant les changements peut se faire non seulement dans l'IPE mais également dans un module dédié situé dans l'IPE ou en aval de l'IPE (entre l'IPE et l'émetteur radio).

Si plusieurs IPE sont relié à un même émetteur radio, selon une variante de l'invention, les IPE échangent des informations concernant des changements de table système et/ou un canal particulier que tous les terminaux sont censés écouter. Dans ce cas, chaque IPE met à jour les drapeaux correspondant qu'il insère dans les trames MPE qu'il génère.

Par ailleurs, l'invention est également compatible avec plusieurs émetteurs radio relié à un ou plusieurs IPE, chacun des émetteurs transmettant vers un ou plusieurs terminaux des trames radios contenant les MPE reçus.

L'invention n'est pas non plus limitée aux drapeaux précédemment décrits mais concerne également la mise à jour, la transmission, la réception et les traitements suivant la réception de drapeaux relatifs à des tables systèmes quelconques, à des informations transmises de façon sensiblement continue ou dans des trames radio dédiées, ces informations étant destinées à un ou plusieurs terminaux recevant un service DVB.

Selon l'invention, le format des drapeaux est quelconque. Avantageusement, le ou les drapeaux est ou sont inclus dans un champ inutilisé des trames MPE. Selon d'autres variantes de l'invention, le ou les drapeaux sont insérés dans des trames radio à un emplacement prédéfini quelconque notamment dans un entête d'un des paquets encapsulé par une trame MPE (par exemple paquet RTP). En outre, chaque drapeau peut être affecté à une table précise ou un canal particulier, ce qui permet au terminal de mieux cibler les données à récupérer. Selon une variante, une partie ou la totalité des drapeaux sont regroupés sur un seul élément binaire (ou bit).

## Revendications

1. Méthode de diffusion de services vidéo numériques comprenant une étape de transmission de services de diffusion de vidéo numérique dans des trames radio à destination d'au moins un terminal (10) possédant un mode veille et un mode sommeil, et une étape d'insertion, dans au moins une partie des trames radio (320) associées à un canal, d'une information représentative (2300 à 2302) d'un changement dans le contenu des trames radio non associées audit canal, de sorte que le terminal puisse rester en mode veille pour recevoir des données relatives au contenu des trames radio (321, 322, 330) non associées audit canal, ayant changé.

2. Méthode selon la revendication 1, dans laquelle l'étape d'insertion comprend une insertion de trames d'encapsulation multiprotocole dites trames MPE dans lesdites trames radio associées audit canal, et une insertion de ladite information représentative (2300 à 2302) d'un changement dans le contenu des trames radio dans au moins une partie desdites trames MPE.

3. Méthode selon la revendication 2, dans laquelle chacune des trames MPE comprend ladite information représentative (2300 à 2302) d'un changement dans le contenu des trames radio.

4. Méthode selon l'une quelconque des revendications 1 à 3, dans laquelle ladite information est représentative d'un changement de table système.

5. Méthode selon l'une quelconque des revendications 1 à 4 dans laquelle ladite information est représentative d'un changement d'un canal d'annonces.

6. Méthode selon l'une quelconque des revendications 1 à 5 comprenant en outre une étape de changement d'état de ladite information lors d'un changement dans le contenu des trames radio.

7. Méthode de réception de trames radio, chacune desdites trames radio comprenant au moins un service de diffusion de vidéo numérique, ladite méthode de réception comprenant les étapes de :
- réception (73) d'au moins une trame radio (320) associée à un canal, par un terminal en mode veille ;
- détection (74) dans une trame radio reçue et associée audit canal, d'une information représentative (2300 à 2302) d'un changement dans le contenu d'au moins une trame radio diffusée et non associée audit canal, ladite information ayant été insérée dans la trame radio associée audit canal lors de la diffusion des trames radio,
- lorsque ladite information détectée indique un changement de contenu, maintien (76) en mode veille tant que le terminal n'a pas reçu les données correspondant au contenu des trames radio diffusées ayant changé, dans le cas contraire mise en mode sommeil (75) jusqu'à la réception de la prochaine trame radio associée audit canal.

8. Méthode selon la revendication 7, dans laquelle ladite information est représentative d'un changement de table système.

9. Méthode selon l'une quelconque des revendications 7 à 8, dans laquelle ladite information est représentative d'un changement d'un canal d'annonces.

10. Méthode selon l'une quelconque des revendications 7 à 9, comprenant en outre une étape de détection de changement d'état de ladite information, un changement d'état étant représentatif d'un changement dans le contenu des trames radio.

11. Appareil de diffusion de services vidéo numériques comprenant des moyens de transmission (64) de services de diffusion de vidéo numérique dans des trames radio à destination d'au moins un terminal (10) possédant un mode veille et un mode sommeil, comprenant des moyens d'insertion dans au moins une partie des trames radio (320) associées à un canal une information représentative (2300 à 2302) d'un changement dans le contenu de trames radio (321, 322, 330) non associées audit canal, de sorte que le terminal (10) puisse rester en mode veille pour recevoir des données relatives au contenu des trames radio (321, 322, 330) ayant changé et non associées audit canal.

12. Terminal (10) de réception de trames radio, chacune desdites trames radio comprenant au moins un service de diffusion de vidéo numérique, le terminal comprenant :
- des moyens pour la réception (54) d'au moins une trame radio **(320)** associée à un canal par le terminal en mode veille ;
- des moyens pour la détection dans une trame radio reçue (320), d'une information représentative (2300 à 2302) d'un changement dans le contenu d'au moins une trame radio diffusée (321, 322, 330) et non associée audit canal, ladite information ayant été insérée dans la trame radio associée audit canal lors de la diffusion des trames radio,
- des moyens pour, lorsque ladite information détectée indique un changement de contenu, le maintien en veille tant que le terminal n'a pas reçu les données correspondant au contenu des trames radio diffusées (321, 322, 330) ayant changé, et dans le cas contraire, pour la mise en mode sommeil jusqu'à la réception de la prochaine trame radio associée audit canal.

## Patentansprüche

1. Verfahren zur Rundsendung digitaler Videodienste, umfassend einen Schritt zur Übertragung von Diensten zur Rundsendung digitaler Videos in Funkrahmen an mindestens ein Endgerät (10), das über einen Standby-Modus und einen Sleep-Modus verfügt, und einen Schritt zum Einfügen in mindestens einen Teil der mit einem Kanal verbundenen Funkrahmen (320) einer repräsentativen Information (2300 bis 2302) von einer Änderung im Inhalt der nicht mit dem besagten Kanal verbundenen Funkrahmen, dergestalt, dass das Endgerät im Standby-Modus bleiben kann, um Daten bezüglich des geänderten Inhalts der nicht mit dem besagten Kanal verbundenen Funkrahmen (321, 322, 330) zu empfangen.

2. Verfahren nach Anspruch 1, in welchem der Einfügungsschritt ein Einfügen von Multiprotokoll-Einbettungs-Rahmen, so genannten MPE-Rahmen, in die mit dem Kanal verbundenen besagten Funkrahmen umfasst, und ein Einfügen der besagten repräsentativen Information (2300 bis 2302) von einer Änderung im Inhalt der Funkrahmen in mindestens einen Teil der besagten MPE-Rahmen.

3. Verfahren nach Anspruch 2, in welchem jeder der MPE-Rahmen die besagte repräsentative Information (2300 bis 2302) von einer Änderung im Inhalt der Funkrahmen umfasst.

4. Verfahren nach einem der Ansprüche 1 bis 3, in welchem die besagte Information repräsentativ für eine Änderung der Systemtabelle ist.

5. Verfahren nach einem der Ansprüche 1 bis 4, in welchem die besagte Information repräsentativ für einen Wechsel eines Ankündigungskanals ist.

6. Verfahren nach einem der Ansprüche 1 bis 5, das unter anderem einen Schritt zum Wechsel des Zustandes der besagten Information bei einer Änderung im Inhalt der Funkrahmen umfasst.

7. Verfahren zum Empfang von Funkrahmen, wobei jeder der besagten Funkrahmen mindestens einen Dienst zur Rundsendung digitaler Videos umfasst, wobei das besagte Empfangsverfahren die Schritte umfasst:
- Empfang (73) von mindestens einem mit einem Kanal verbundenen Funkrahmen (320) über ein Endgerät im Standby-Modus,
- Erfassung (74) in einem empfangenen und mit dem besagten Kanal verbundenen Funkrahmen einer repräsentativen Information (2300 und 2302) von einer Änderung im Inhalt von mindestens einem gesendeten und nicht mit dem besagten Kanal verbundenen Funkrahmen, wobei die besagte Information in den mit dem besagten Kanal verbundenen Funkrahmen bei der Rundsendung der Funkrahmen eingefügt wurde,
- während die besagte erfasste Information eine Inhaltsänderung anzeigt, Verbleiben (76) im Standby-Modus solange das Endgerät die Daten nicht empfangen hat, die dem geänderten Inhalt der gesendeten Funkrahmen entsprechen, anderenfalls Versetzen in den Sleep-Modus (75) bis zum Empfang des nächsten mit dem besagten Kanal verbundenen Funkrahmens.

8. Verfahren nach Anspruch 7, in welchem die besagte Information repräsentativ für eine Änderung der Systemtabelle ist.

9. Verfahren nach einem der Ansprüche 7 bis 8, in welchem die besagte Information repräsentativ für eine Änderung eines Ankündigungskanals ist.

10. Verfahren nach einem der Ansprüche 7 bis 9, das unter anderem einen Schritt zum Erfassen eines Zustandswechsels der besagten Information umfasst, wobei ein Zustandswechsel repräsentativ für eine Änderung im Inhalt der Funkrahmen ist.

11. Vorrichtung zur Rundsendung digitaler Videodienste, die Mittel zur Übertragung (64) von Diensten zur Rundsendung digitaler Videos in Funkrahmen an mindestens ein Endgerät (10), das über einen Standby- und einen Sleep-Modus verfügt, umfasst, und Mittel zum Einfügen in mindestens einen Teil der mit einem Kanal verbundenen Funkrahmen (320) einer repräsentativen Information (2300 bis 2302) von einer Änderung im Inhalt von nicht mit dem besagten Kanal verbundenen Funkrahmen (321, 322, 330), dergestalt, dass das Endgerät (10) im Standby-Modus bleiben kann, um Daten bezüglich des geänderten Inhalts der nicht mit besagtem Kanal verbundenen Funkrahmen (321, 322, 330) zu empfangen.

12. Endgerät (10) zum Empfangen von Funkrahmen, wobei jeder dieser Funkrahmen mindestens einen Dienst zur Rundsendung digitaler Videos umfasst, wobei das Endgerät umfasst:
- Mittel zum Empfang (54) von mindestens einem mit einem Kanal verbundenen Funkrahmen (320) über das Endgerät im Standby-Modus,
- Mittel zur Erfassung in einem empfangenen Funkrahmen (320) einer repräsentativen Information (2300 bis 2302) von einer Änderung im Inhalt von mindestens einem gesendeten und nicht mit dem Kanal verbundenen Funkrahmen (321, 322, 330), wobei die besagte Information in den mit dem besagten Kanal verbundenen Funkrahmen bei der Rundsendung der Funkrahmen eingefügt wurde,
- Mittel für, während die besagte erfasste Information eine Inhaltsänderung anzeigt, das Verbleiben im Standby, solange das Endgerät die Daten nicht empfangen hat, die dem geänderten Inhalt der gesendeten Funkrahmen (321, 322, 330) entsprechen, und anderenfalls für das Versetzen in den Sleep-Modus bis zum Empfang des nächsten mit dem besagten Kanal verbundenen Funkrahmens.

## Claims

1. Method for broadcasting digital video services comprising a step for transmitting digital video broadcasting services in bursts to at least one terminal (10) having a standby mode and a sleep mode, and an insertion step, in at least one part of the bursts (320) associated with a channel, of information representative (2300 to 2302) of a change in the content of the bursts
not associated with said channel, so that the terminal can be in standby mode to receive data relating to the content of the bursts (321, 322, 330) not associated with said channel, having changed.

2. Method according to claim 1, wherein the insertion step comprises an insertion of multiprotocol encapsulation frames called MPE frames in said bursts associated with said channel, and an insertion of said information representative (2300 to 2302) of a change in the content of the bursts in at least one part of said MPE frames.

3. Method according to claim 2, wherein each of the MPE frames comprises said information representative (2300 to 2302) of a change in the content of the bursts.

4. Method according to any one of claims 1 to 3, wherein said information is representative of a system table change.

5. Method according to any one of claims 1 to 4, wherein said information is representative of an announcement channel change.

6. Method according to any one of claims 1 to 5, further comprising a step for changing the state of said information during a change in the content of the bursts.

7. Method for receiving bursts, each of said bursts comprising at least one digital video broadcasting service, said method comprising the steps for:
- receiving (73) at least one burst (320) associated with a channel, by a terminal in standby mode,
- detecting (74) in a burst received and associated with said channel, information representative (2300 to 2302) of a change in the content of at least one burst broadcast and not associated with said channel, said information having been inserted in the burst associated with said channel during the broadcasting of the bursts,
- when said detected information indicates a change in content, maintaining (76) in standby mode as long as the terminal has not received the data corresponding to the content of the broadcast bursts having changed, otherwise placing in sleep mode (75) until reception of the next burst associated with said channel.

8. Method according to claim 7, wherein said information is representative of a system table change.

9. Method according to any one of claims 7 to 8, wherein said information is representative of an announcement channel change.

10. Method according to any one of claims 7 to 9, further comprising a step for detecting a state change of said information, a state change being representative of a change in the content of the bursts.

11. Device for broadcasting digital video services comprising means for transmitting (64) digital video broadcasting services in bursts to at least one terminal (10) having a standby mode and a sleep mode, comprising insertion means in at least one part of the bursts (320) associated with a channel an information representative (2300 to 2302) of a change in the content of bursts (321, 322, 330) not associated with said channel, so that the terminal (10) can be in standby mode to receive data relating to the content of the bursts (321, 322, 330) having changed and not associated with said channel.

12. Terminal (10) for receiving bursts, each of said bursts comprising at least one digital video broadcasting service, the terminal comprising:
- means for receiving (54) at least one burst (320) associated with a channel by the terminal in standby mode,
- means for detecting in a burst received (320), information representative (2300 to 2302) of a change in the content of at least one burst broadcast (321, 322, 330) and not associated with said channel, said information having been inserted in the burst associated with said channel during the broadcasting of the bursts,
- means for, when said detected information indicates a change in content, maintaining in standby mode as long as the terminal has not received the data corresponding to the content of the broadcast bursts (321, 322, 330) having changed, otherwise, for placing in sleep mode until reception of the next burst associated with said channel.
